(19) Europäisches Patentamt
European Patent Office
Office européen des brevets

(11) **EP 2 296 878 B1**

(12) **EUROPEAN PATENT SPECIFICATION**

(45) Date of publication and mention
of the grant of the patent:
**11.07.2012 Bulletin 2012/28**

(51) Int Cl.:
**B32B 17/10** (2006.01)   **E06B 3/66** (2006.01)
**F21V 33/00** (2006.01)   **F21K 99/00** (2010.01)
**C03C 17/23** (2006.01)

(21) Application number: **08874531.0**

(22) Date of filing: **22.12.2008**

(86) International application number:
**PCT/EP2008/068180**

(87) International publication number:
**WO 2009/146760 (10.12.2009 Gazette 2009/50)**

(54) **TRANSPARENT PANEL WITH DIFFUSER**

DURCHSICHTIGE PLATTE MIT DIFFUSOR

PANNEAU TRANSPARENT À DIFFUSEUR

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **02.06.2008 PCT/EP2008/056769**

(43) Date of publication of application:
**23.03.2011 Bulletin 2011/12**

(73) Proprietor: **AGC Glass Europe
1170 Bruxelles (Watermael-Boitsfort) (BE)**

(72) Inventor: **LUIJKX, Antoine
B-6040 Jumet (BE)**

(74) Representative: **Verbrugge, Vivien François
Emeric et al
AGC Glass Europe
Intellectual Property Department
R&D Centre
Rue de l'Aurore, 2
6040 Jumet (BE)**

(56) References cited:
**EP-A- 1 437 215      EP-A- 1 834 548
WO-A-2007/057456    CN-A- 101 105 276**

## Description

The invention relates to a panel, comprising a first sheet of transparent material such as glass, a second sheet of transparent material such as glass, at least two conductive layers, a light emitting device and a diffusing layer as well as a method of manufacturing the same.

Technical Background

Panels of glass are well-known in the window industry since decades. Panels of glass with light emitting devices for instance as described in CN101105276A or EP1834548A or WO2007/057456A are used e. g. for displaying information and/or for lighting purposes. In recent years, such panels of glass with light emitting devices have grown significantly in the world of lighting and performance, as they are nowadays comparable to older technologies, such as light tubes or incandescent lamps, in terms of their cost/performance ratio. Light emitting devices, such as light emitting diodes, are especially advantageous to illuminate a single object or a single space, preferably directly located below the light emitting device.

However, and similar to older lighting technologies, directly illuminating an object or a space with a light emitting device of a panel of glass posses the problem of glare. Users being lighted by such light emitting devices often feel uncomfortable as being dazzled, even when being away a long distance from the light emitting device.

In order to prevent this problem, it is known from the prior art to limit the angles from which an observer can see a direct source of light, e. g. emitted from a light emitting device situated in a ceiling. Typically, an observer can see a direct light source within angles below 30°. It is known to use parts to limit the light source from several angles. It is further known from the prior art to implement lenses pasted onto the glass or at the light emitting device itself. However, such solutions possess the disadvantage that additional material is required, which is difficult to insert into the panel of glass and to adjust within the panel of glass.

Summary of the invention

Accordingly, it is the object of the invention to provide a panel of transparent material such as glass with an integrated light emitting device that allows for illuminating objects or space while diminishing the effect of glare as well as a method of manufacturing the same. Another object of the invention according to at least one of its embodiments is to provide a panel of transparent material such as glass with an integrated light emitting device that provide higher luminous intensity while diminishing the effect of glare.

This object is addressed by a panel, comprising a first sheet of transparent material such as glass, a second sheet of transparent material such as glass, at least two conductive layers, a light emitting device and a diffusing layer, wherein the at least two conductive layers are provided on one side of the first sheet of transparent material such as glass, the at least two conductive layers are electrically separated from each other, the light emitting device is electrically connected to one conductive layer and to another conductive layer, the at least two conductive layers and the light emitting device are provided between the first sheet of transparent material such as glass and the second sheet of transparent material such as glass, and the diffusing layer is provided on the second sheet of transparent material such as glass, wherein the diffusing has an opening and the opening is arranged in the area of the light emitting device, and congruent with it.

Accordingly, it is an essential idea of the invention that the opening does not affect the luminous intensity of the light emitted by the light emitting device, while the diffusing layer diminishes the glare. In this way, the panel according to the invention is advantageous over the prior art, as it allows for an unhindered lighting in the area of the opening, while significantly reducing the effect of glare in the area outside of the opening.

The panel can be provided as a glass panel or as a plastic panel, or as an insulating glass panel, wherein the panel may form a window of a vehicle, a house, or a plane. The at least two conductive layers are preferably provided as coplanar and/or thin tin oxide films, e.g. indium tin oxide (ITO) films, and may be applied by any suitable method such as chemical vapour deposition (CVD) coatings or magnitron (sputtered) coatings, thus providing an electrically conductive layer. The at least two conductive layers can also be provided as metallic layers or layers made of any suitable electrically conductive material. The at least two conductive layers can also can be applied by other methods such as serigraphy, screen printing, and other suitable method. According to another embodiment, each of the at least two conductive layers (used to provide electrical power to the light emitting devices) is provided as an electrically conductive wire.

In order to obtain the electrical separation between the at least two conductive layers, it is possible to provide a conductive layer on the first sheet of glass, which is then separated into the at least two conductive layers by laser ablation, masking/lift off or chemical attack/etching.

According to another preferred embodiment of the invention, the size of the opening is congruent with the size of the light emitting device. In other words, the perimeter of the opening is preferably congruent with the perimeter of the light emitting device, thus allowing the light emitted by the light emitting device to escape unhindered through the opening.

In general, the opening can be arranged anywhere in the diffusing layer. However, according to another preferred embodiment of the invention, the opening is arranged congruent with the light emitting device. In this way, an object or a space situated in the area of the opening outside of the panel of glass can be illuminated by the light emitting device, while the luminous intensity of the light emitting device is not diminished by the opening.

In general, the diffusing layer can be provided on one side of the second sheet of glass, on the other side of the second sheet of glass, or a diffusing layer can be provided on both sides of the second sheet of glass. However, according to a preferred embodiment of the invention, the diffusing layer is provided on the side of the second sheet of glass facing away from the first sheet of glass.

According to another preferred embodiment of the invention, the light emitting device comprises a light emitting diode. It is possible that the light emitting device emits light in any colour as known from the prior art. However, it is preferred that the light emitting device emits white light. It is further preferred that the light emitted by the light emitting device is directed towards the opening. In this way, the luminous intensity of the light emitting by the light emitting device can be maximized.

In general, the diffusing layer can be made of different materials as known from the prior art. However, according to a preferred embodiment of the invention, the diffusing layer is provided as a translucent film. It is further preferred, that the diffusing layer is realized by partly sandblasting, frostening or etching at least one side of the second sheet of glass. Preferably, the etching is achieved by an acid, or any other means for creating a diffuse surface. In this way, the majority of the second sheet of glass, which constitutes the diffusing layer by preferably sandblasting, frostening or etching, prevents for the effect of glare, while the area of the light emitting device of the diffusing layer is left raw by means of the opening, thus allowing the light emitted by the light emitting device to escape unhindered from the panel.

According to another preferred embodiment of the invention, a plastics interlayer is provided and the plastics interlayer is laminated between the first sheet of glass and the second sheet of glass. Preferably, the plastics interlayer is provided as polyvinylbutyral. A so-called sandwich of the first sheet of glass, the plastics interlayer and the second sheet of glass is preferably laminated in an automated laminating line by using the procedure of calendering and autoclaving, preferably resulting in a clear glass laminate well-known from car windscreens.

According to another preferred embodiment of the invention, a spacer is provided, wherein the spacer is arranged between the first sheet of glass and the second sheet of glass. In this way, the first sheet of glass and the second sheet of glass are spaced away from each other by the spacer. The distance between the first sheet of glass and the second sheet of glass is preferably filled with a gas, such as air, argon or crypton, or with vacuum. The spacer is preferably made of a metallic material, or alternatively out of a non-conducting material, such as butyl.

According to another preferred embodiment of the invention, the spacer is arranged in the border area of the first sheet of glass and/or of the second sheet of glass. In this way, the spacer is arranged in a merely invisible manner, given that the spacer is preferably located in the border area of the first sheet of glass and/or of the second sheet of glass.

According to another preferred embodiment of the invention, four spacers are provided and the first sheet of glass and/or the second sheet of glass are/is rectangular, and in each edge of the rectangular first sheet of glass and/or of the second sheet of glass one spacer is arranged, respectively.

According to another preferred embodiment of the invention, the coefficient of diffuse transmission of the diffusion layer is $\geq 10$ % and/or the transmission coefficient of the opening is $\geq 80$ % for wavelengths of the light emitted by the light emitting device $\geq 380$ nm and $\leq 780$ nm, respectively, preferably the coefficient of diffuse transmission of the diffusion layer is $\geq 20$ % and/or the transmission coefficient of the opening is $\geq 80$ % for wavelengths of the light emitted by the light emitting device $\geq 380$ nm and $\geq 780$, respectively, and more preferably the coefficient of diffuse transmission of the diffusion layer is $\geq 35$ % and/or the transmission coefficient of the opening is $\geq 90$ % for wavelengths of the light emitted by the light emitting device $\geq 380$ nm and $\leq 780$, respectively

These and other aspects of the invention will be apparent from and elucidated with reference to the embodiments described hereinafter.

Brief Description of the Drawings

In the drawings:

Fig. 1    schematically shows a side view of a panel according to a preferred embodiment of the invention,

Fig. 2    schematically shows a side view of a panel according to another preferred embodiment of the invention,

Fig. 3    schematically shows a side view of a panel according to another preferred embodiment of the invention, and

Fig. 4    schematically shows a top view of a panel according to another preferred embodiment of the invention.

Detailed Description of the illustrative embodiments

The drawings described are only schematic and are non-limiting. In the drawings, the size of some of the elements may be exaggerated and not drawn on scale for illustrative purposes. The mere fact that certain measures are recited in mutually different dependent claims does not indicate that a combination of these measured cannot be used to advantage. Any reference signs in the claims should not be construed as limiting the scope.

Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

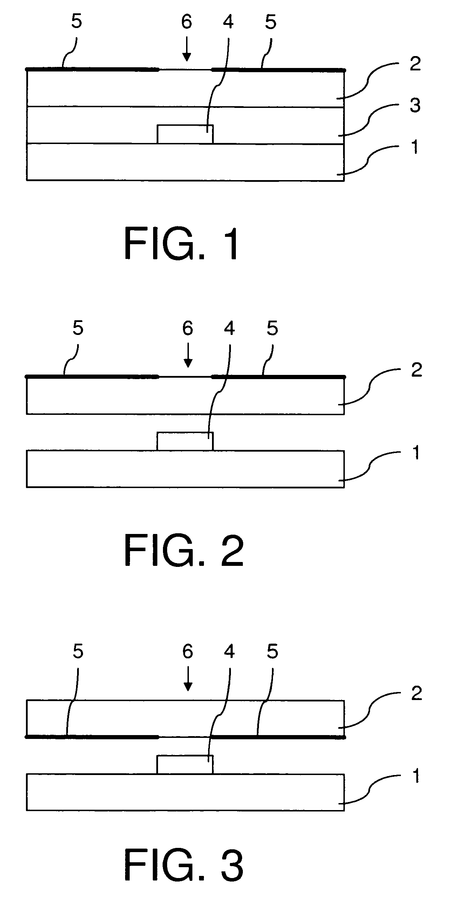

As can be seen from Fig. 1, according to a preferred embodiment of the invention, a panel comprising a first sheet of transparent material such as glass 1, a second sheet of transparent material such as glass 2 and a plastics interlayer 3 is provided. At least two conductive layers, not depicted, are provided on the side of the first sheet of transparent material such as glass 1 facing towards the second sheet of transparent material such as glass 2. The at least two conductive layers are preferably provided as coplanar films. The layers maybe made from a tin oxide, e.g. thin indium tin oxide (ITO) films, that can be applied by any suitable method, e.g. as chemical vapor deposition (CVD) coatings or magnetron (sputtered) coatings. These layers are electrically separated from each other, e.g. by means of laser ablation, masking and/or lift off, or chemical attack/etching.

A light emitting device 4 is provided between the first sheet of glass 1 and the second sheet of glass 2, wherein the light emitting device 4 is electrically connected to one conductive layer and to another conductive layer, respectively. The light emitting device 4 can be electrically connected to or be contacting at least two conductive layers by means of gluing and/or other means such as springs as known from the art. In this way, electrical power can be provided to the light emitting device 4, which is preferably provided as a light emitting diode, by one conductive layer and by another conductive layer.

A diffusing layer 5 is provided on the side of the second sheet of glass 2 facing away from the first sheet of glass 1. The diffusing layer can be provided as a translucent film, or can be realized by surface processing e.g. partly sandblasting, frostening or etching the respective side of the second sheet of glass 2.

As can be seen further from Fig. 1 to Fig. 3, an opening 6 is provided in the diffusing layer 5, wherein the opening is arranged in the area of the light emitting device 4. According to the preferred embodiment of the invention, the size of the opening 6 is congruent with the size of the light emitting device 4. Further, the opening 6 is arranged congruent with the light emitting device 4, thus allowing the light emitted by the light emitting device 4 to escape through the opening 6 from the panel.

In this way, the panel according to the invention allows for lighting an object or a space situated outside the panel in the area of the opening 6, while diminishing the effect of glare by the diffusing layer.

As can be seen further from Fig. 2 and Fig. 3, the distance between the first sheet of glass 1 and the second sheet of glass 2 can be filled with a gas, such as air, or a noble gas such as argon or crypton, or with a vacuum, instead of the plastics interlayer 3. Spacers, not depicted can be arranged between the first sheet of glass 1 and a second sheet of glass 2, wherein the spacers are preferably arranged in the border area of the panel, thus not negatively affecting the visual characteristics of the panel. It is also possible to provide the diffusing layer 5 on the side of the second sheet of glass 2 facing towards the first sheet of glass 1, as depicted in Fig. 3.

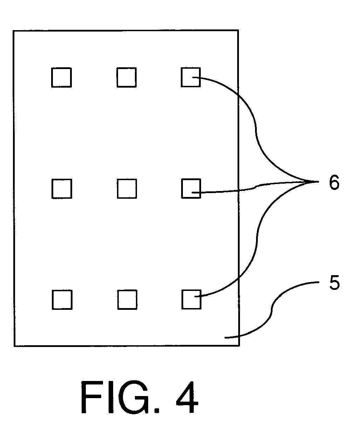

Fig. 4 shows a top view of the panel comprising nine openings 6 surrounded by the diffusion layer 5. The light emitting devices 4, which are preferably situated below the openings 6, can be connected in series and/or in parallel.

The diffusion layer 5 preferably comprises a coefficient of diffuse transmission $\geq 20\ \%$ and/or the opening preferably comprises a transmission coefficient $\geq 80\ \%$,

in both cases for wavelengths ≥ 380 nm and ≤ 780 nm.

The coefficient of diffuse transmission can be measured with a spectrophotometer, such as the commercial type Perkin-Elmer 900, equipped with a sphere of integration. In this way the diffusing layer 5, for which the coefficient of diffuse transmission has to be measured, can be positioned tangentially on the sphere so as to seal a small opening on its surface. An incident monochromatic ray issued by a monochromator of the spectrophotometer is directed to the diffusing layer 5 to be measured, thus sealing the opening in the sphere, according to a perpendicular direction of the surface of the sample.

An opposite opening on the sphere in the direction of the incident light allows the output of light transmitted through the diffusing layer 5, so that the sphere traps all diffuse light rays reflected in every other direction. A photoelectric sensor is preferably located elsewhere on the surface of the sphere measuring in an angle of observation of ten degrees total diffuse monochromatic light integrated by the sphere.

The coefficient of diffuse transmission $T_{VD}$ can be calculated by the following equation, by integrating all diffuse monochromatic lights on its entire range of wavelength in the visible spectrum:

$$T_{vd} = \frac{\sum\limits_{\lambda=380}^{780nm} T_{vd}(\lambda) * V(\lambda) * D65(\lambda)}{\sum\limits_{\lambda=380}^{780nm} V(\lambda) * D65(\lambda)}$$

wherein,

$T_{vd}$ (λ) is scattered light spectral total,
V (λ) is the spectral light sensitivity of an average human eye, and
D65 (λ) is the spectral distribution relative standard illuminant "D65".

While the invention has been illustrated and described in detail in the drawings and foregoing description, such illustration and description are to be considered illustrative or exemplary and not restrictive; the invention is not limited to the disclosed embodiments.

Other variations to be disclosed embodiments can be understood and effected by those skilled in the art in practicing the claimed invention, from a study of the drawings, the disclosure, and the appended claims. In the claims, the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

## Claims

1. Panel, comprising
   a first sheet of glass (1), a second sheet of glass (2), at least two conductive layers, a light emitting device (4) and a diffusing layer (5), wherein
   the at least two conductive layers are provided on one side of the first sheet of glass (1),
   the at least two conductive layers are electrically separated from each other,
   the light emitting device (4) is electrically connected to one conductive layer and to another conductive layer,
   the at least two conductive layers and the light emitting device (4) are provided between the first sheet of glass (1) and the second sheet of glass (2), **characterized in that**
   the diffusing layer (5) is provided on the second sheet of glass (2), wherein
   the diffusing layer (5) comprises an opening (6) and the opening (6) is arranged in the area of the light emitting device (4),
   wherein the opening (6) is arranged congruent with the light emitting device (4).

2. Panel according to claim 1, wherein the size of the opening (6) is congruent with the size of the light emitting device (4).

3. Panel according to any of the proceeding claims, wherein the diffusing layer (5) is provided on the side of the second sheet of glass (2) facing away from the first sheet of glass (1).

4. Panel according to any of the proceeding claims, wherein the light emitting device (4) comprises a light emitting diode.

5. Panel according to any of the proceeding claims, wherein the light emitted by the light emitting device (4) is directed towards the opening (6).

6. Panel according to any of the proceeding claims, wherein the diffusing layer (5) is provided as a translucent film.

7. Panel according to any of claims 1 to 5, wherein the diffusing layer (5) is realized by partly sandblasting, frostening, or etching at least one side of the second sheet of glass (2).

8. Panel according to any of the proceeding claims, wherein a plastics interlayer (3) is provided and the plastics interlayer (3) is laminated between the first sheet of glass (1) and the second sheet of glass (2).

9. Panel according to any of claims 1 to 7, wherein a spacer is provided and the spacer is arranged between the first sheet of glass (1) and the second sheet of glass (2).

10. Panel according to claim 9, wherein the spacer is arranged in the border area of the first sheet of glass (1) and/or of the second sheet of glass (2).

11. Panel according to claims 9 or 10, wherein four spacers are provided and the first sheet of glass (1) and/or the second sheet of glass (2) are/is rectangular, and in each edge of the rectangular first sheet of glass (1) and/or of the second sheet of glass (2) one spacer is arranged, respectively.

12. Panel according to any of the proceeding claims, wherein the coefficient of diffuse transmission of the diffusion layer (5) is $\geq$ 20 % and/or the transmission coefficient of the opening (6) is $\geq$ 80 % for wavelengths $\geq$ 380 nm and $\leq$ 780 nm, respectively.

13. A method of making a panel, comprising
providing a first sheet of glass (1) and a second sheet of glass (2),
forming at least two conductive layers on one side of the first sheet of glass (1) so that the at least two conductive layers are electrically separated from each other,
mounting a light emitting device (4) so that the light emitting device (4) is electrically connected to one conductive layer and to another conductive layer, and the at least two conductive layers and the light emitting device (4) are provided between the first sheet of glass (1) and the second sheet of glass (2), and
forming a diffusing layer (5), **characterized in that** the diffusing layer (5) is provided on the second sheet of glass (2), and the diffusing layer (5) comprises an opening (6), the opening (6) being arranged in the area of the light emitting device (4), wherein the opening (6) is arranged congruent with the light emitting device (4).

14. Method according to claim 13 wherein the coeffcient of diffuse transmission of the diffusion layer (5) is $\geq$ 20 % and/or the transmission coefficient of the opening (6) is $\geq$ 80 % for wavelengths $\geq$ 380 nm and $\leq$ 780 nm, respectively.

**Patentansprüche**

1. Platte, umfassend
eine erste Glasplatte (1), eine zweite Glasplatte (2), mindestens zwei leitfähige Schichten, eine lichtemittierende Vorrichtung (4) und eine Diffusionsschicht (5), wobei
die mindestens zwei leitfähigen Schichten auf einer Seite der ersten Glasplatte (1) bereitgestellt sind, die mindestens zwei leitfähigen Schichten elektrisch voneinander getrennt sind, die lichtemittierende Vorrichtung (4) elektrisch mit einer leitfähigen Schicht und mit einer anderen leitfähigen Schicht verbunden ist,
die mindestens zwei leitfähigen Schichten und die lichtemittierende Vorrichtung (4) zwischen der ersten Glasplatte (1) und der zweiten Glasplatte (2) bereitgestellt sind, **dadurch gekennzeichnet, dass** die Diffusionsschicht (5) auf der zweiten Glasplatte (2) bereitgestellt ist, wobei die Diffusionsschicht (5) eine Öffnung (6) umfasst und
die Öffnung (6) in dem Bereich der lichtemittierenden Vorrichtung (4) angeordnet ist,
wobei die Öffnung (6) kongruent zu der lichtemittierenden Vorrichtung (4) angeordnet ist.

2. Platte nach Anspruch 1, wobei die Größe der Öffnung (6) kongruent zu der Größe der lichtemittierenden Vorrichtung (4) ist.

3. Platte nach einem der vorhergehenden Ansprüche, wobei die Diffusionsschicht (5) auf der Seite der zweiten Glasplatte (2), die von der ersten Glasplatte (1) abgewandt ist, bereitgestellt ist.

4. Platte nach einem der vorhergehenden Ansprüche, wobei die lichtemittierende Vorrichtung (4) eine lichtemittierende Diode umfasst.

5. Platte nach einem der vorhergehenden Ansprüche, wobei das Licht, das von der lichtemittierenden Vorrichtung (4) emittiert wird, auf die Öffnung (6) gerichtet ist.

6. Platte nach einem der vorhergehenden Ansprüche, wobei die Diffusionsschicht (5) als ein lichtdurchlässiger Film bereitgestellt ist.

7. Platte nach einem der Ansprüche 1 bis 5, wobei die Diffusionsschicht (5) durch partielles Sandstrahlen, Mattätzen oder Ätzen von mindestens einer Seite der zweiten Glasplatte (2) realisiert wird.

8. Platte nach einem der vorhergehenden Ansprüche, wobei eine Kunststoff-Zwischenschicht (3) bereitgestellt ist und die Kunststoff-Zwischenschicht (3) zwischen die erste Glasplatte (1) und die zweite Glasplatte (2) laminiert ist.

9. Platte nach einem der Ansprüche 1 bis 7, wobei ein Abstandhalter bereitgestellt ist und der Abstandhalter zwischen der ersten Glasplatte (1) und der zweiten Glasplatte (2) angeordnet ist.

10. Platte nach Anspruch 9, wobei der Abstandhalter in dem Randbereich der ersten Glasplatte (1) und/oder der zweiten Glasplatte (2) angeordnet ist.

**11.** Platte nach Anspruch 9 oder 10, wobei vier Abstandhalter bereitgestellt sind und die erste Glasplatte (1) und/oder die zweite Glasplatte (2) rechteckig sind/ist und in jeder Ecke der rechteckigen ersten Glasplatte (1) und/oder der zweiten Glasplatte (2) jeweils ein Abstandhalter angeordnet ist.

**12.** Platte nach einem der vorhergehenden Ansprüche, wobei der Koeffizient der diffusen Transmission der Diffusionsschicht (5) ≥ 20 % ist und/oder der Transmissionskoeffizient der Öffnung (6) ≥ 80 % ist, jeweils für Wellenlängen ≥ 380 nm und ≤ 780 nm.

**13.** Verfahren zur Herstellung einer Platte, umfassend das Bereitstellen einer ersten Glasplatte (1) und einer zweiten Glasplatte (2), das Bilden von mindestens zwei leitfähigen Schichten auf einer Seite der ersten Glasplatte (1), so dass die mindestens zwei leitfähigen Schichten elektrisch voneinander getrennt sind, das Anbringen einer lichtemittierenden Vorrichtung (4), so dass die lichtemittierende Vorrichtung (4) elektrisch mit einer leitfähigen Schicht und einer anderen leitfähigen Schicht verbunden ist, und die mindestens zwei leitfähigen Schichten und die lichtemittierende Vorrichtung (4) zwischen der ersten Glasplatte (1) und der zweiten Glasplatte (2) bereitgestellt sind, und das Bilden einer Diffusionsschicht (5), **dadurch gekennzeichnet, dass** die Diffusionsschicht (5) auf der zweiten Glasplatte (2) bereitgestellt ist und die Diffusionsschicht (5) eine Öffnung (6) umfasst, wobei die Öffnung (6) in dem Bereich der lichtemittierenden Vorrichtung (4) angeordnet ist, wobei die Öffnung (6) kongruent zu der lichtemittierenden Vorrichtung (4) angeordnet ist.

**14.** Verfahren nach Anspruch 13, wobei der Koeffizient der diffusen Transmission der Diffusionsschicht (5) ≥ 20% ist und/oder der Transmissionkoeffizient der Öffnung (6) ≥ 80% ist, jeweils für Wellenlängen ≥ 380 nm und ≤ 780 nm.

**Revendications**

**1.** Un panneau, comprenant une première feuille de verre (1), une seconde feuille de verre (2), au moins deux couches conductrices, un dispositif émetteur de lumière (4) et une couche de diffusion (5), dans lequel les au moins deux couches conductrices sont disposées sur une face de la première feuille de verre (1), les au moins deux couches conductrices sont séparées électriquement l'une de l'autre, le dispositif émetteur de lumière (4) est électriquement relié à une couche conductrice et à une autre couche conductrice, les au moins des couches conductrices et le dispositif émetteur de lumière (4) sont disposés entre la première feuille de verre (1) et la seconde couche de verre (2), **caractérisé en ce que** la couche de diffusion (5) est disposée sur la seconde feuille de verre (2), dans laquelle la couche de diffusion (5) comprend une ouverture (6) et l'ouverture (6) est réalisée dans la zone du dispositif émetteur de lumière (4), dans lequel l'ouverture (6) est disposée de manière à coïncider avec le dispositif émetteur de lumière (4).

**2.** Le panneau selon la revendication 1, dans lequel la taille de l'ouverture (6) coïncide avec la taille du dispositif émetteur de lumière (4).

**3.** Le panneau selon l'une quelconque des revendications précédentes, dans lequel la couche de diffusion (5) est disposée sur la face de la seconde feuille de verre (2) à l'opposé de la première feuille de verre (1).

**4.** Le panneau selon l'une quelconque des revendications précédentes, dans lequel le dispositif émetteur de lumière (4) comprend une diode électroluminescente.

**5.** Le panneau selon l'une quelconque des revendications précédentes, dans lequel la lumière émise par le dispositif émetteur de lumière (4) est dirigée vers l'ouverture (6).

**6.** Le panneau selon l'une quelconque des revendications précédentes, dans lequel la couche de diffusion (5) prend la forme d'un film translucide.

**7.** Le panneau selon l'une quelconque des revendications 1 à 5, dans lequel la couche de diffusion (5) est réalisée en sablant, en dépolissant ou en attaquant à l'acide en partie au moins une face de la seconde feuille de verre (2).

**8.** Le panneau selon l'une quelconque des revendications précédentes, dans lequel est disposée une couche intermédiaire en plastique (3) et la couche intermédiaire en plastique est laminée entre la première feuille de verre (1) et la seconde feuille de verre (2).

**9.** Le panneau selon l'une quelconque des revendications 1 à 7, dans lequel est placé un espaceur et l'espaceur est disposé entre la première feuille de verre (1) et la seconde feuille de verre (2).

**10.** Le panneau selon la revendication 9, dans lequel l'espaceur est disposé dans la zone périphérique de la première feuille de verre (1) et/ou de la seconde feuille de verre (2).

**11.** Le panneau selon la revendication 9 ou 10, dans lequel sont disposés quatre espaceurs et la première feuille de verre (1) et/ou la seconde feuille de verre (2) sont/est rectangulaire(s), et un espaceur est disposé respectivement le long de chaque bord de la première feuille de verre (1) rectangulaire et/ou de la seconde feuille de verre (2).

**12.** Le panneau selon l'une quelconque des revendications précédentes, dans lequel le coefficient de transmission diffuse de la couche de diffusion (5) est ≥ 20 % et/ou le coefficient de transmission de l'ouverture (6) est ≥ 80 % pour des longueurs d'onde respectivement ≥ 380 nm et ≤ 780 nm.

**13.** Une méthode de fabrication d'un panneau comprenant
la fourniture d'une première feuille de verre (1) et d'une seconde feuille de verre (2),
la formation d'au moins deux couches conductrices sur une face de la première feuille de verre (1) de sorte que les au moins deux couches conductrices soient électriquement séparées l'une de l'autre,
le montage d'un dispositif émetteur de lumière (4) de sorte que le dispositif émetteur de lumière (4) soit électriquement relié à une couche conductrice et à une autre couche conductrice, et que les au moins deux couches conductrices et le dispositif émetteur de lumière (4) soient disposés entre la première feuille de verre (1) et la seconde feuille de verre (2), et la formation d'une couche de diffusion (5), **caractérisée en ce que** la couche de diffusion (5) est disposée sur la seconde feuille de verre (2), et la couche de diffusion (5) comprend une ouverture (6), l'ouverture (6) étant réalisée dans la zone du dispositif émetteur de lumière (4), dans laquelle l'ouverture (6) est disposée de manière à coïncider avec le dispositif émetteur de lumière (4).

**14.** La méthode selon la revendication 14, dans laquelle le coefficient de transmission diffuse de la couche de diffusion (5) est ≥ 20 % et/ou le coefficient de transmission de l'ouverture (6) est ≥ 80 % pour des longueurs d'onde respectivement ≥ 380 nm et ≤ 780 nm.

FIG. 1

FIG. 2

FIG. 3

FIG. 4

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101105276 A
- EP 1834548 A
- WO 2007057456 A